**Europäisches Patentamt**

**European Patent Office**

**Office européen des brevets**

(19)

(11) Veröffentlichungsnummer: **0 160 112**
**B1**

(12)

# EUROPÄISCHE PATENTSCHRIFT

(45) Veröffentlichungstag der Patentschrift:
**03.06.87**

(51) Int. Cl.⁴: **B 62 D 25/18**

(21) Anmeldenummer: **84104806.9**

(22) Anmeldetag: **28.04.84**

(54) **Schmutzfänger für Kraftfahrzeuge.**

(43) Veröffentlichungstag der Anmeldung:
**06.11.85 Patentblatt 85/45**

(45) Bekanntmachung des Hinweises auf die Patenterteilung:
**03.06.87 Patentblatt 87/23**

(84) Benannte Vertragsstaaten:
**DE FR GB**

(56) Entgegenhaltungen:
**DE - A - 1 962 863**
**DE - A - 2 905 753**
**DE - A - 3 136 592**
**DE - U - 7 704 015**
**DE - U - 8 309 211**
**DE - U - 8 330 385**
**FR - A - 2 410 591**
**US - A - 4 099 736**

(73) Patentinhaber: **WEGU Gummi- und Kunststoffwerke Walter Dräbing KG, Mündener Strasse 31, D-3500 Kassel (DE)**

(72) Erfinder: **Hertig, Wolfgang, Philosophenweg 80, D-3510 Hann. Münden 1 (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

ACTORUM AG

# Beschreibung

Die Erfindung bezieht sich auf einen Schmutzfänger für Kraftfahrzeuge mit den im Oberbegriff des Anspruchs 1 angegebenen Merkmalen.

Ein derartiger Schmutzfänger ist aus der US-A-4 099 736 bekannt. Die Innenkante des Anpassungsansatzes dieses Schmutzfängers ist bereichsweise mit einer Mehrzahl von Befestigungswulsten versehen, die sich um den Rand des Kotflügelfalzes herum umlegen lassen. Im Bereich dieser Befestigungswulste kann jeweils eine oder mehrere Befestigungseinrichtungen vorgesehen sein, die aus zwei losen Klemmbacken und einer Schraube bestehen. Die Klemmbacken besitzen etwa U-förmigen Querschnitt und werden mit diesen Querschnitten ineinander eingreifend angeordnet, wobei der eine Klemmbacken den Befestigungswulst aussen übergreift. Die Schraube greift in ein Gewinde in dem einen Klemmbacken ein. Durch Anziehen der Schraube wird die Klemmkraft aufgebracht, wobei sich ein Schenkel eines Klemmbackens mit seinem Steg unmittelbar auf dem Blech des Kotflügelrandes aufsetzt, wodurch die Gefahr der Beschädigung der Blechoberfläche besteht. Bei der Montage müssen die Einzelteile der Befestigungseinrichtungen einzeln gehandhabt werden. Da in aller Regel noch ein Ausrichtvorgang des Schmutzfängers relativ zum Kotflügelrand erforderlich ist, verschieben sich die Teile der Befestigungseinrichtung relativ zum Kotflügelrand und relativ zum Anpassungsansatz, so dass es in hohem Masse von der Geschicklichkeit dessen, der die Montage durchführt, abhängt, ob ein ordnungsgemässer Sitz erreicht wird oder nicht.

Die FR-A-2410 591 zeigt einen Schmutzfänger mit einer Befestigungseinrichtung aus einem festen, im Bereich des Anpassungsansatzes bis in den Hauptkörper hinein durchgehenden Klemmbacken, dem mehrere bewegliche Klemmbacken zugeordnet sind. Der feste Klemmbacken ist nicht an dem Anpassungsansatz, sondern im Bereich des Lappenhauptkörpers über eine Nietung fest mit dem Schmutzfänger verbunden. Die beweglichen Klemmbacken erstrecken sich im wesentlichen quer zu dem Verlauf der Innenkante des Anpassungsansatzes. Der Anpassungsansatz besitzt keine Befestigungswulst, sondern ist dort, wo Schrauben der Befestigungseinrichtung zur Wirkung kommen, mit Ausnehmungen versehen. Jeder lose Klemmbacken ist an dem durchgehenden, festen Klemmbacken abgestützt, jedoch nicht verdrehsicher gelagert. Bei der Montage müssen auch hier die Einzelteile der Befestigungseinrichtung — abgesehen von dem festen Klemmbacken — einzeln gehandhabt werden. Dabei setzen sich die beweglichen Klemmbacken unmittelbar auf der Metalloberfläche des Kotflügelfalzes auf, so dass auch hier die direkte Metall/Metall-Berührung mit der Gefahr der Beschädigung der Lackierung besteht. Dies ist insbesondere während des Ausrichtens und Festziehens der Befestigungseinrichtungen der Fall.

Die DE-A-1 962 863 zeigt einen Schmutzfänger mit einer Befestigungswulst, die sich über einen grossen Teil der Länge der Innenkante des Anpassungsansatzes erstreckt. Es ist eine Befestigungseinrichtung in Form einer Schraube vorgesehen, zu deren Anbringung eine gesonderte Bohrung im Kotflügelfalz erforderlich ist. Bei diesem nachträglichen Anbringen der Bohrung wird der Oberflächenschutz der Karosserie an dieser Stelle verletzt. Der Befestigungswulst weist eine Nut auf, in die der Rand des Kotflügelfalzes eingesteckt wird. Eine gesonderte zusätzliche, klemmende Befestigung, etwa mit Hilfe einer Klemmfeder o. dgl., ist an dieser Stelle nicht vorgesehen. Auch fehlt eine der Befestigungswulst zugeordnete Widerlagerrippe, so dass der Anpassungsansatz ohne diese Gegenlagerung leicht den Rand des Kotflügelfalzes wieder verlassen kann. Die Befestigung des Schmutzfängers wird demzufolge als unzureichend empfunden.

Die DE-A-31 36 592 zeigt einen Schmutzfänger mit einem Lappenhauptkörper und einem Anpassungsansatz, wobei im Abstand zu der Innenkante des Anpassungsansatzes eine Widerlagerrippe vorgesehen ist, die sich auf die Aussenseite des Kotflügelfalzes auflegt. An besonders ausgewählten Befestigungsstellen ist je ein kurzer, über ein Filmscharnier umschlagbare Befestigungswulst vorgesehen. Dem Befestigungswulst sind Klemmfedern zugeordnet, so dass damit die Befestigungspunkte festgelegt sind.

Die Klemmfedern bestehen in erster Linie aus Federstahl, können aber auch aus einem geeigneten Kunststoff, z.B. Polyamid, hergestellt sein und sind meist zweiteilig ausgebildet, so dass eine erste Klemmfeder mit schwach bemessener Klemmkraft von einer zweiten Klemmfeder mit erheblich erhöhter Klemmkraft überdeckt wird. Dies bietet zwar im Hinblick auf das Ausrichten des Schmutzfängers Vorteile, jedoch muss die doppelte Anzahl von Klemmfedern montiert werden, wobei insbes. die Montage der äusseren, mit erhöhter Klemmkraft ausgestatteten Klemmfeder schwierig ist. Beim Ausrichten des Schmutzfängers relativ zum Kotflügelfalz kann es darüber hinaus vorkommen, dass die mit schwach bemessener Klemmkraft ausgestatteten Klemmfeder verrutscht.

Aus der DE-U-83 09 211.0 und der DE-U-83 30 385 sind Befestigungseinrichtungen bekannt, die im wesentlichen aus zwei Klemmbacken bestehen, die von einer Schraube durchsetzt sind, so dass durch das Anziehen der Schraube eine Klemmkraft aufgebracht werden kann. Diese Befestigungseinrichtungen in Form der Klemmschrauben können an jeder beliebigen Stelle der Innenkante des Anpassungsansatzes angesetzt werden. In aller Regel werden mindestens zwei derartige Klemmschrauben für die Montage eines Schmutzfängers benutzt.

Nachteilig ist an diesen bekannten klemmenden Befestigungseinrichtungen, die immer mindestens in zweifacher Anordnung herangezogen werden, dass sie bei der Montage des Schmutzfängers zunächst nur leicht angezogen werden dürfen. Dann erfolgt noch eine Ausrichtung des Lappenhauptkörpers und des Anpassungsansatzes relativ zum Fahrzeug, wobei sich die Ansatzstelle der Befestigungseinrichtungen verändert und die einzelne Befestigungsschraube bzw. -klemme u. U. eine Drehbewegung um eine senkrecht auf der Ebene des Lappenhauptkörpers stehende Achse ausführt. Dadurch verlassen diese Befestigungseinrichtungen den vorher vorgesehenen Sitz. Die einzelnen Klemmschenkel verdrehen sich gegeneinander, so dass die Überdeckung der Klemmschenkel mit dem Kotflügelfalz vermindert wird. Oft wird bei der Montage eine Verdrehung deshalb nicht bemerkt, weil der betreffende Klemmschenkel hinter den Kotflügelfalz greift. Beim festen Anziehen der zugehörigen Schraube der Befestigungseinrichtung wird der ordnungsgemässe Sitz nicht wieder erreicht. Die Festhaltekraft der Befestigungseinrichtung ist damit vermindert.

Es ist auch schon bekannt, eine klemmende Befestigungseinrichtung aus einem festen und einem beweglichen Klemmbacken zusammenzusetzen, die von einer Schraube durchsetzt werden. Der feste Klemmbacken ist mit einem bumerangartig entlang der Innenkante des Anpassungsansatzes verlaufenden Blechstreifen fest verbunden, wobei der Blechstreifen wiederum mit dem Anpassungsansatz verbunden ist. Bei dieser Ausführungsform können sich zwar die festen Klemmschenkel gegenüber dem Anpassungsansatz beim Ausrichten des Schmutzfängers nicht verschieben; jedoch besteht auch hier die Gefahr, dass sich bei einer solchen Ausrichtbewegung die beweglichen Klemmbacken verdrehen, so dass beim Festziehen der Schrauben der ordnungsgemässe Sitz und die vorgesehene Klemmkraft der Befestigungseinrichtungen nicht erreicht wird. Die bekannten Befestigungseinrichtungen in Form der Klemmschrauben mit den zwei Klemmbacken kennzeichnen sich immer dadurch, dass die Klemmbacken quer zur Innenkante des Anpassungsantzes länger ausgebildet sind als in Richtung der Innenkante des Anpassungsansatzes. Wenn Klemmeinrichtungen mit fest mit dem Anpassungsansatz verbundenen Klemmbacken Anwendung finden, ist die Gewähr dafür gegeben, dass bei der Montage der Befestigungseinrichtungen automatisch der richtige Befestigungspunkt gewählt wird. Dies ist bei Verwendung völlig loser Befestigungseinrichtungen nicht immer der Fall.

Der Erfindung liegt die Aufgabe zugrunde, einen Schmutzfänger der eingangs beschriebenen Art aufzuzeigen, der die angegebenen Nachteile nicht mehr aufweist und bei dem gewährleistet ist, dass die klemmende Befestigungseinrichtung auch beim Ausrichten des Lappenhauptkörpers einen ordnungsgemässen Sitz des Schmutzfängers gewährleistet. Dabei sollen die Klemmbacken der Befestigungseinrichtung ihre Relativlage zu der Innenkante des Anpassungsansatzes nicht verändern.

Erfindungsgemäss wird dies dadurch erreicht, dass der erste Klemmbacken der Befestigungseinrichtung über die Erstreckung der Befestigungswulst parallel zur Innenkante des Anpassungsansatzes fest mit dem Anpassungsansatz verbunden ist, dass die beiden Klemmbacken in Richtung parallel zur Innenkante des Anpassungsansatzes länger als quer dazu ausgebildet und aneinander verdrehsicher gelagert sind, dass die beiden Klemmbacken im Öffnungssinn des durch sie gebildeten Klemmspalts durch den Befestigungswulst beaufschlagt sind, und dass der Befestigungswulst an seinem freien Ende etwa parallel zu der Innenkante des Anpassungsansatzes einen abgewinkelten Rand aufweist, an dem der bewegliche Klemmbacken geführt ist. Mit der Schraube oder den Schrauben werden die beiden Klemmbacken im Sinne einer Klemmung aufeinander zu und mittels der Befestigungswulst in Gegenrichtung beaufschlagt. Dies erbringt einen Stabilisierungseffekt für die Klemmeinrichtung und den Befestigungswulst andererseits, so dass sich der Befestigungswulst mit ensprechender Öffnung der Nut durch Einstellung der Schraube vorbereiten lässt, bevor der Befestigungswulst auf den Kotflügelfalz aufgesetzt wird. Dabei ändert sich die Weite der Nut nicht mehr. Ein leichtes Aufsetzen ist möglich. Auch wenn die Schraube oder die Schrauben leicht angezogen werden, so dass der Schmutzfänger noch verschiebbar an dem Kotflügelrand hängt, ändert sich beim Verschieben und beim Ausrichten nicht mehr die Relativlage der gesamten Befestigungseinrichtung zu dem Anpassungsansatz. Insbesondere ist damit gewährleistet, dass sich die aus Metall bestehenden Klemmbacken nicht mehr so verdrehen können, dass sie etwa von der Befestigungswulst herabrutschen. Eine Metallberührung zwischen den Klemmbacken und dem Kotflügelfalz wird damit sicher vermieden. Die beiden Klemmbacken besitzen eine ganz andere Proportion als die im Stand der Technik bekannten Klemmbacken. Sie sind nämlich in Richtung der Innenkante des Anpassungsansatzes länger als quer dazu ausgebildet. Diese Proportion ergibt die einfache Möglichkeit, die beiden Klemmbacken aneinander so zuführen und verdrehsicher zu lagern, dass der bewegliche Klemmbacken von der Befestigungswulst bei Ausrichtarbeiten des Schmutzfängers am Kraftfahrzeug nicht mehr herunterrutschen kann. Durch die neue Proportion der Befestigungseinrichtung werden nicht nur die beschriebenen technischen Vorteile erreicht; auch das ästhetische Aussehen der Befestigungseinrichtung wird besser. Da der Befestigungswulst an seinem freien Ende etwa parallel zu der Innenkante des Anpassungsansatzes einen abgewinkelten Rand aufweist, an den sich der bewegliche Klemmbacken anlegt, wird eine gegenseitige Führung zwischen dem beweglichen Klemmbacken und der Befestigungswulst erreicht. Da zusätzlich die beiden Klemmbacken aneinander geführt sind, ist eine Führung letztendlich zwischen den drei genannten Teilen erreicht, und zwar derart, dass sich diese Teile immer in einer konstanten, gewünschten Relativlage zu der Innenkante des Anpassungsansatzes befinden.

Der eine der beiden Klemmbacken kann im Bereich des Klemmgrundes mindestens zwei von einer Umbiegung abstehende, abständig vorgesehene Fortsätze aufweisen, die parallel zur Innenkante des Anpassungsansatzes angeordnet sind. Der andere Klemmbacken kann aus einer im wesentlichen ebenen Platte bestehen und mindestens zwei den Fortsätzen zugeordnete Durchbrechungen aufweisen. Die Befestigungseinrichtung ist damit sehr einfach und aus wenigen Teilen eingebaut, die sich einfach herstellen, montieren und handhaben lassen.

Der bewegliche Klemmbacken kann dem Rand des Befestigungswulstes zugekehrt abgewinkelt sein. Es versteht sich, dass diese Abwinklung nur um wenige Grade durchgeführt ist, um auf diese Art und Weise zwei Punkte oder auch eine linienförmige Zone zu schaffen, in welcher eine erhöhte Klemmkraft auftritt. Dies wirkt sich vorteilhaft bei solchen Karosserien aus, deren Karosseriefalz mit einer Beschichtung versehen ist, die bekanntermassen gegen Korrosion und Geräuschentwicklung eingesetzt wird.

Der feste Klemmbacken kann mittels einer Nietung mit dem Anpassungsansatz verbunden sein. Die Nietung dient nur der Befestigung des Klemmbackens an dem Anpassungsansatz.

In bevorzugter Ausführungsform können beide Klemmbacken gegenüber ihrer Breite eine etwa doppelte Länge aufweisen. Diese Proportionen haben sich als günstig erwiesen. Die Befestigungseinrichtung fasst damit gleichsam zwei bisherige Befestigungsklemmen zu einer einzigen zusammen. Die Befestigungseinrichtung des Schmutzfängers kann lediglich aus den beiden Klemmbacken und mindestens einer Schraube bestehen. Immerhin ist aber z. B. die Anzahl der Teile gegenüber dem Einsatz von bisher mindestens üblichen zwei Befestigungsklemmen auf die Hälfte verringert.

Der feste Klemmbacken kann zum Durchtritt der Schraube bzw. der Schrauben ein Langloch aufweisen, dessen Langachse quer zu dem Verlauf der Innenkante des Anpassungsansatzes angeordnet ist. Es versteht sich, dass bei zwei Schrauben zwei Langlöcher vorgesehen sind. Diese Langlöcher erlauben das Kippen des beweglichen Klemmbackens gegenüber dem festen Klemmbacken, weil die Schraube oder die Schrauben mit ihrem Gewinde in den beweglichen Klemmbacken eingreifen und beim Kippen mit diesem zusammen verschwenken.

Die Erfindung wird anhand eines Ausführungsbeispiels weiter beschrieben. Es zeigen:

Fig. 1 eine Draufsicht auf die am Fahrzeug nach vorn gekehrte Vorderseite des Schmutzfängers,

Fig. 2 einen Schnitt gemäss der Linie II-II in Fig. 1 und

Fig. 3 eine Draufsicht auf einen Teil der Rückseite des Schmutzfängers gemäss Fig. 1.

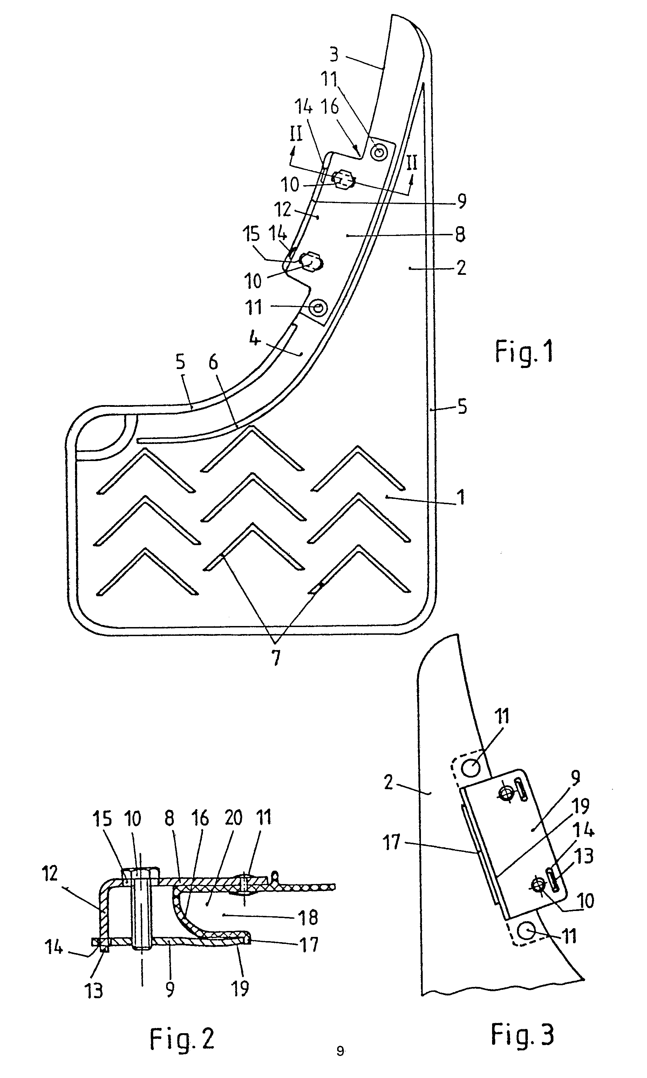

Der in Fig. 1 dargestellte Schmutzfänger besitzt einen Lappen aus biegsamen Material, beispielsweise Gummi, Kunststoff u. dgl., der wiederum aus einem Lappenhauptkörper 1 und einem sich an diesem nach oben anschliessenden Anpassungsansatz 2 zur Anpassung an den Karosserieverlauf besteht. Der Anpassungsansatz 2 besitzt eine Innenkante 3, die bumerangartig bogenförmig verläuft, so dass dieser Schmutzfänger als Universalschmutzfänger an eine Vielzahl von ähnlich gestalteten Kraftfahrzeugkarosserien sowohl im Bereich der Vorder- als auch der Hinterräder montierbar ist. Parallel zur Innenkante erstreckt sich ein Befestigungsstreifen 4, der üblicherweise der Befestigung des Schmutzfängers an dem nach innen weisenden Kotflügelfalz im Radkasten dient. Ein etwa umlaufender Rand 5 und eine Rippe 6 sowie weitere Erhebungen 7 im Bereich des Lappenhauptkörpers 1 tragen zur Verstärkung und Versteifung des Lappens aus biegsamen Material bei.

Die Befestigung geschieht an der dafür vorgesehenen Stelle des Befestigungsstreifens 4 mit Hilfe einer Befestigungseinrichtung aus einem festen Klemmschenkel 8, einem beweglichen Klemmschenkel 9 und ein oder zwei Schrauben 10, die die beiden Klemmschenkel 8 und 9 miteinander verbinden und die Klemmkraft im Klemmspalt herbeiführen. Der fest Klemmschenkel 8 ist mit Hilfe zweier Niete 11 fest mit dem Lappen aus biegsamem Material verbunden. Er erstreckt sich mit einem Grossteil parallel zur Ebene des Lappens und besitzt eine Umbiegung 12, die im Klemmgrund dem beweglichen Klemmschenkel 9 zugekehrt ist. Die Umbiegung 12 endet in Fortsätzen 13, die parallel zur Innenkante 3 des Anpassungsansatzes 2 vorgesehen sind. Der andere Klemmschenkel 9 besitzt den Fortsätzen 13 zugeordnet Durchbrechungen 14, so dass die Fortsätze 13 und die Druchbrechungen 14 eine Bewegungsachse bilden, um die der bewegliche Klemmschenkel 9 relativ zu dem festen Klemmschenkel 8 beim Anziehen der Schrauben 10 gekippt wird. Die Schrauben 10 greifen durch Langlöcher 15 im festen Klemmschenkel 8 hindurch und sind über ein Gewinde im beweglichen Klemmschenkel 9 in diesem verankert. Beim Anziehen der Schrauben 10 kippen diese mit dem beweglichen Klemmschenkel 9 innerhalb der Langlöcher 15. Im Bereich der beiden Klemmschenkel 8 und 9 weist der Befestigungsstreifen 4 einen um den nach innen gerichteten Kotflügelrand herumgeschlagbaren Befestigungswulst 16 aus dem biegsamen Material des Lappens auf, der in einem abgewinkelten Rand 17 endet, an dem sich ebenfalls der bewegliche Klemmbacken 9 führt. Der Befestigungswulst 16 ist bestrebt, den beweclichen Klemmbacken 9 im Öffnungssinne zu belasten, also einer von der Schraube 10 auf die beiden Klemmschenkel 8 und 9 ausgeübten Zugkraft engegenzuwirken. Damit wird erreicht, dass der Klemmspalt 18 in Form einer durch den Befestigungswulst 16 gebildeten Nut 20 zur Aufnahme des Karosseriefalzes immer geöffnet ist, und dass auf beiden Seiten des Karosseriefalzes immer ein Gummiteil aufliegt und daher eine Metall-/Metallberührung zwischen den Klemmschenkeln 8 und 9 einerseits und dem Karosseriefalz andererseits vermieden wird. Ein Knick 19 bzw. eine Abwicklung in dem den Rand 17 zugekehrten Bereich an dem beweglichen Klemmbacken 9 sorgt dafür, dass eine Aufbringung der Klemmkraft an einer Stelle erreicht wird, die von dem freien Kotflügelrand etwas entfernt liegt. Auf diese Art und Weise wird ein sicherer Sitz des Schmutzfängers am Kotflügelrand erreicht.

Die Montage eines derartigen Universalschmutzfängers an dem Kotflügelrand eines Kraftfahrzeuges gestaltet sich vergleichsweise mühelos, wobei die folgenden Vorteile ausgenutzt werden. Zunächst einmal ist es möglich, durch verschieden weites Anziehen der Schrauben 10 – anstelle der 2 Schrauben 20 könnte auch nur eine einzige Schraube 10 etwa in der Mitte vorgesehen sein – den Klemmspalt 18 voreinzustellen, und zwar so, dass sich die Befestigungseinrichtung leicht über den Kotflügelrand hinüberschieben lässt. Da der Befestigungswulst 16 bestrebt ist, den Klemmspalt 18 zu erweitern, liegt er und sein Rand 17 an dem beweglichen Klemmschenkel 9 an, so dass die Teile der Befestigungseinrichtung in dieser Offenstellung des Klemmspaltes 18 stabilisiert sind. In dieser Form kann nun der Schmutzfänger mit der Befestigungseinrichtung über den Kotflügelfalz geschoben werden. Anschliessend werden die Schrauben 10 leicht angezogen, so dass der Schmutzfänger am Kotflügelrand hängenbleibt. Je nach Erfordernis wird jetzt der gesamte Schmutzfänger senkrecht und waagerecht noch ausgerichtet, wobei sich die Befestigungseinrichtung geringfügig relativ zu dem Kotflügelfalz des Fahrzeuges verschieben lässt. Dabei kann sich weder der feste Klemmschenkel 8 noch der bewegliche Klemmschenkel 9 relativ zu dem Anpassungsansatz 2 oder auch relativ zu der Befestigungswulst 16 verdrehen. Damit ist sichergestellt, dass eine Metall-/Metallberührung nicht stattfindet und beim weiteren Anziehen der Schrauben 10 der ordnungsgemäss klemmende Sitz des Schmutzfängers erreicht wird. Dies ist weitgehend unabhängig von der besonderen Form des Kotflügelfalzes an dem betreffenden Fahrzeug. Die Befestigungsstelle für die Befestigungseinrichtung liegt von vornherein fest und erstreckt sich nur über einen relativ kurzen Bereich der Innenkante des Anpassungsansatzes 2. Wenn der bewegliche Klemmschenkel 9 mit dem Knick 19 ausgestattet wird, wird eine linienförmig angreifende Klemmkraft übertragen, die für einen ordnungsgemässen unverrutschbaren Sitz des Schmutzfängers an dem Karosseriefalz günstig ist.

Selbstverständlich ist es möglich, die Befestigungseinrichtung zu variieren. Beispielsweise können die beiden Klemmschenkel (8 und 9) gleich lang ausgebildet sein, so dass der Klemmschenkel (8) gegenüber dem Klemmschenkel (9) in Richtung der Innenkante (3) des Anpassungsansatzes (2) nicht vorsteht. Die beiden Niete (11) können dann zweckmässig dort eingesetzt werden, wo sich etwa auch die Schrauben (10) befinden. Es ist auch möglich, nur einen einzigen Niet (11) zweckmässig in der Mitte der Erstreckung des Klemmschenkels (8) anzuordnen. Aus Gründen der Verstärkung kann dann der umlaufende Rand (5) bis an den Klemmschenkel (8) verlängert und auch oberhalb des Klemmschenkels (8) am Anpassungsansatz (2) vorgesehen sein, so dass dieser umlaufende Rand (5) nur im Bereich des Klemmschenkels (8) unterbrochen ist.

*Bezugszeichenliste:*

1 = Lappenhauptkörper
2 = Anpassungsansatz
3 = Innenkante
4 = Befestigungsstreifen
5 = Rand
6 = Rippe
7 = Erhebung
8 = Klemmschenkel
9 = Klemmschenkel
10 = Schraube
11 = Niet
12 = Umbiegung
13 = Fortsatz
14 = Durchbrechung
15 = Langloch
16 = Befestigungswulst
17 = Rand
18 = Klemmspalt
19 = Knick
20 = Nut

**Patentansprüche**

1. Schmutzfänger für Kraftfahrzeuge, mit einem Lappen aus biegsamen Material, der einen Lappenhauptkörper (1) und einen an diesen nach oben anschliessenden Anpassungsansatz (2) zur Anpassung an den Karosserieverlauf aufweist, wobei an der Innenkante (3) des Anpassungsansatzes (2) ein Befestigungswulst (16) vorgesehen ist, der mittels einer Nut (20) den zum Kotflügelinnenraum gerichteten Rand des Kotflügelfalzes umgreift, und mit einer den Befestigungswulst umgreifenden und zwei Klemmbacken (8, 9) sowie mindestens eine Schraube (10) aufweisenden Befestigungseinrichtung, dadurch gekennzeichnet, dass der erste Klemmbacken (8) der Befestigungseinrichtung über die Erstreckung der Befestigungswulst (16) parallel zur Innenkante (3) des Anpassungsansatzes (2) fest mit dem Anpassungsansatz (2) verbunden ist, dass die beiden Klemmbacken (8, 9) in Richtung parallel zur Innenkante (3) des Anpassungsansatzes (2) länger als quer dazu ausgebildet und aneinander verdrehsicher gelagert sind, dass die beiden Klemmbacken im Öffnungssinn des durch sie gebildeten Klemmspaltes (18) durch den Befestigungswulst (16) beaufschlagt sind und dass der Befestigungswulst (16) an seinem freien Ende etwa parallel zu der Innenkante (3) des Anpassungsansatzes (2) einen abgewinkelten Rand (17) aufweist, an dem der bewegliche Klemmbacken (9) geführt ist.

2. Schmutzfänger nach Anspruch 1, dadurch gekennzeichnet, dass der eine der beiden Klemmbacken (8, 9) im Bereich des Klemmgrundes mindestens zwei von einer Umbiegung (12) abstehende, abständig vorgesehene Fortsätze (13) aufweist, die parallel zur Innenkante (3) des Anpassungsansatzes (2) angeordnet sind, und dass der andere Klemmbacken aus einer im wesentlichen ebenen Platte besteht und mindestens zwei den Fortsätzen (13) zugeordnete Durchbrechungen (14) aufweist.

3. Schmutzfänger nach Anspruch 2, dadurch gekennzeichnet, dass der bewegliche Klemmbakken (9) dem Rand (17) der Befestigungswulst (16) zugekehrt abgewinkelt ist.

4. Schmutzfänger nach Anspruch 1, dadurch gekennzeichnet, dass der feste Klemmbacken (8) mittels einer Nietung (11) mit dem Anpassungsansatz (2) verbunden ist.

5. Schmutzfänger nach Anspruch 1, dadurch gekennzeichnet, dass die beiden Klemmbacken (8, 9) gegenüber ihrer Breite eine etwa doppelte Länge aufweisen.

6. Schmutzfänger nach Anspruch 1 und 5, dadurch gekennzeichnet, dass die Befestigungseinrichtung des Schmutzfängers lediglich aus den beiden Klemmbacken (8, 9) und mindestens einer Schraube (10) besteht.

7. Schmutzfänger nach Anspruch 1 bis 6, dadurch gekennzeichnet, dass der feste Klemmbakken (8) zum Durchtritt der Schraube (10) bzw. der Schrauben (10) ein Langloch (15) aufweist, dessen Langachse quer zu dem Verlauf der Innenkante (3) des Anpassungsansatzes (2) angeordnet ist.

## Claims

1. Motor vehicle mud flap, comprising an essentially flat piece of flexible material which exhibits a main area (1) and a contiguously upward-extending fitting-prolongation (2) which serves to effect matching fitting to the vehicle body contour, an attachment curl-over (16) being provided at the inner edge (3) of the fitting-prolongation (2), this attachment curl-over (16) forming a channel (20) which enables it to fit around the turned-over edge of the wing of the vehicle, namely the edge which points towards the interior of the wing, and further comprising an attachment device which fits around the attachment curl-over and exhibits two clamping jaws (8, 9) and one or more screws (10), characterized in that the first clamping jaw (8) of the attachment device is permanently connected to the fitting-prolongation (2), via the extension of the attachment curl-over (16) parallel to the inner edge (3) of the said prolongation (2), in that the two clamping jaws (8, 9) are designed to be longer in the direction parallel to the inner edge (3) of the fitting-prolongation (2) than at right-angles thereto, and are mounted in a manner such that they cannot twist relative to each other, in that the attachment curl-over (16) applies a force to the two clamping jaws, tending to open the clamping gap (18) which they form, and in that the attachment curl-over (16) exhibits an angle-profile edge (17) at its free end, approximatively parallel to the inner edge (3) of the fitting-prolongation (2), against which edge (17) the movable clamping jaw (9) is guided.

2. Mud flap according to Claim 1, characterized in that one of the two clamping jaws (8, 9) exhibits at least two lugs (13) in the region of the base of the clamp, these lugs (13) projecting from a curved-over portion (12), and being spaced one from another and arranged parallel to the inner edge (3) of the fitting-prolongation (2), and in that the other clamping jaw consists of a plate which is essentially flat and exhibits at least two perforations (14) that are assigned to the lugs (13).

3. Mud flap according to Claim 2, characterized in that the movable clamping jaw (9) is angled towards the edge (17) of the attachment curl-over (16).

4. Mud flap according to Claim 1, characterized in that the fixed clamping jaw (8) is connected to the fitting-prolongation (2) by means of a riveted fastening (11).

5. Mud flap according to Claim 1, characterized in that the two clamping jaws (8, 9) are approximately twice as long as they are wide.

6. Mud flap according to Claims 1 and 2, characterized in that its attachment device comprises merely the two clamping jaws (8, 9) and one or more screws (10).

7. Mud flap according to Claims 1 to 6, characterized in that in order to allow through-passage of the screw (10) or screws (10), the fixed clamping jaw (8) exhibits a corresponding number of elongated holes (15), each with its long axis arranged at right-angles to the line of the inner edge (3) of the fitting-prolongation (2).

## Revendications

1. Bavette de garde-boue pour véhicules à moteur, munie d'une bavette en matériau flexible, qui présente une partie principale (1) de bavette et une partie d'adaptation (2) qui se rattache à cette dernière vers le haut en vue de l'adaptation à la forme de la carrosserie, une nervure de fixation étant prévue sur le bord intérieur (3) de la partie d'adaptation (2), d'un dispositif de fixation qui entoure la nervure de fixation et présente deux mâchoires de serrage (8, 9) ainsi qu'au moins une vis (10), caractérisée par le fait que la première mâchoire de serrage (8) est reliée de façon fixe à la partie d'adaptation (2) au-dessus de la partie de la nervure (16) de fixation qui s'étend parallèlement au bord intérieur (3) de la partie d'adaptation (2), que les deux mâchoires (8, 9) sont plus longues dans la direction parallèle au bord intérieur (3) de la partie d'adaptation (2) que dans la direction transversale et sont montées de façon à ne pas pouvoir tourner l'une par rapport à l'autre, que les deux mâchoires de serrage sont poussées dans le sens de l'ouverture de la fente de serrage (18) qu'elles forment par la nervure (16) de fixation, et que la nervure de fixation (16) présente à son extrémité libre approximativement parallèle au bord intérieur (3) de la partie d'adaptation (2) un rebord coudé (17) devant lequel passe la mâchoire mobile (9).

2. Bavette de garde-boue selon la revendication 1, caractérisée par le fait que l'une des deux mâchoires de serrage (8, 9) présente dans la zone de serrage au moins deux prolongements (13) prévus à l'écart l'un de l'autre, qui s'écartent du coude (12) et qui sont disposés parallèlement au bord intérieur (3) de la partie d'adaptation (2), et que l'autre mâchoire de serrage se compose d'une plaque sensiblement plate et présente au moins deux ouvertures (14) correspondant aux prolongements (13).

3. Bavette de garde-boue selon la revendication 2, caractérisée par le fait que la mâchoire mobile (9) est coudée du côté du bord (17) de la nervure de fixation (16).

4. Bavette de garde-boue selon la revendication 1, caractérisée par le fait que la mâchoire de serrage (8) fixe est reliée à la partie d'adaptation (2) au moyen d'un rivetage (11).

5. Bavette de garde-boue selon la revendication 1, caractérisée par le fait que les deux mâchoires de serrage (8, 9) présentent une longueur environ double de leur largeur.

6. Bavette de garde-boue selon les revendications 1 et 5, caractérisée par le fait que le dispositif de fixation de la bavette de garde-boue se compose seulement de deux mâchoires de serrage (8, 9) et d'une vis (10) au moins.

7. Bavette de garde-boue selon les revendications 1 à 6, caractérisée par le fait que la mâchoire (8) de serrage fixe présente un trou allongé pour le passage de la vis (10), ou des vis (10), dont l'axe longitudinal est disposé transversalement par rapport à la direction générale du bord intérieur (3) de la partie d'adaptation (2).

Fig.1

Fig.2

Fig.3